# EUROPÄISCHE PATENTSCHRIFT

(11) **EP 3 871 021 B1**
(45) Veröffentlichungstag und Bekanntmachung des Hinweises auf die Patenterteilung: **03.01.2024**
(21) Anmeldenummer: 19795471.2
(22) Anmeldetag: 17.10.2019
(51) Int. Cl.: G02B 5/04, G02B 21/00, G01B 11/26, G01B 9/02, G01B 9/02098, G01B 9/02015

(54) **VERFAHREN UND VORRICHTUNG ZUM ERFASSEN VON RICHTUNGSÄNDERUNGEN EINES LICHTSTRAHLS**
METHOD AND APPARATUS FOR DETECTING CHANGES IN THE DIRECTION OF A LIGHT BEAM
PROCÉDÉ ET DISPOSITIF DE DÉTECTION DE CHANGEMENTS DE DIRECTION D'UN FAISCEAU LUMINEUX

(30) Priorität: 24.10.2018 DE 102018126544
(43) Veröffentlichungstag der Anmeldung: 01.09.2021
(73) Patentinhaber: Max-Planck-Gesellschaft zur Förderung der Wissenschaften e.V., 80539 München (DE)
(72) Erfinder: ENGELHARDT, Johann, 76669 Bad Schönborn (DE)
(74) Vertreter: REHBERG HÜPPE + PARTNER
(86) Internationale Anmeldenummer: PCT/EP2019/078245
(87) Internationale Veröffentlichungsnummer: WO 2020/083744

(56) Entgegenhaltungen:
- CN-A- 108 020 179
- CN-B- 101 858 788
- CN-B- 105 698 710
- JP-A- H0 611 388
- JP-A- H03 115 809
- US-A- 5 218 425
- US-A1- 2003 160 969

## Beschreibung

### TECHNISCHES GEBIET DER ERFINDUNG

Die Erfindung bezieht sich auf ein Verfahren und eine Vorrichtung zum Erfassen von Richtungsänderungen eines kohärenten Lichtstrahls. Mit diesen Richtungsänderungen sind hier Änderungen der Winkellage, d. h. des Strahlwinkels des kohärenten Lichtstrahls gemeint. Entsprechend werden hier die Angaben Richtungsänderung, Änderung der Winkellage und Änderung des Strahlwinkels synonym verwendet, ebenso wie die Angaben Winkellage und Strahlwinkel. Wenn zum Beispiel in einem Scanning-Lichtmikroskop bei einem fokussierten Beleuchtungslichtstrahl, der zum Abtasten eines Probe verwendete wird, eine Positioniergenauigkeit im Bereich von 1 Nanometer erreicht werden soll, muss ein Strahlwinkel des Beleuchtungslichtstrahls mit einer deutlich höheren Genauigkeit als 1 µrad kontrollierbar und messbar sein. 1 µrad entspricht 1 mm seitlicher Abweichung bei 1 km Abstand.

Thermische Instabilitäten durch Materialausdehnung und Luftbewegungen führen jedoch auch unter regulären Laborbedingungen oft zu Positionsungenauigkeiten über diesen Werten. Vielfach werden Driften von Beleuchtungslichtstrahlen und Objekten relativ zum Objektiv eines Scanning-Lichtmikroskops in der Größenordnung von 1 nm/s beobachtet, so dass bereits Messverfahren, die mehrere Sekunden dauern, durch Drifteffekte in ihrer Genauigkeit erheblich beeinträchtigt sein können.

Um Drifteffekte kompensieren oder bei einer Messung korrigierend berücksichtigen zu können, müssen folglich Strahlwinkel mit Genauigkeiten im nrad-Bereich genau und robust gemessen werden können.

### STAND DER TECHNIK

Bei einem bekannten Verfahren zum Erfassen von Richtungsänderungen eines kohärenten Lichtstrahls wird der Lichtstrahl auf einen segmentierten Detektor, im einfachsten Fall auf eine Vierquadrantendiode, gelenkt, und die relativen Intensitätsvariationen über die Detektorsegmente werden gemessen. Die Messwerte sind dabei in der Regel auch von der Strahlintensität und dem Gradienten der Strahlintensität abhängig und müssen entsprechend kalibriert werden.

Aus M. D. Turner, et al.: "Picoradian deflection measurement with an interferometric quasiautocollimator using weak value amplification", Optics Letters, April 15, 2011, Vol. 36, No. 8, S. 1479-1481 und der US 8 842 291 B2 ist die Verwendung eines "interferometrischen Quasi-Autokollimators (iQuAC)" bekannt, der sogenannte "weak value amplification" anwendet, um Änderungen der Winkellage eines Target-Spiegels zu messen. In dem iQuAC wird einfallendes Laserlicht in zwei Teilstrahlen aufgespalten, und die beiden Teilstrahlen werden nach Reflektion an dem Target-Spiegel auf zwei unterschiedlichen Wegen, die sich durch eine ungerade ganze Zahl an weiteren Reflektionen unterscheiden, geführt und auf einem positionsempfindlichen Photodetektor überlagert. Eine leichte Dejustage gegenüber exakt gleich langen Strahlengängen der Teilstrahlen, die eine vollständige destruktive Interferenz auf dem positionsempfindlichen Photodetektor ergeben würde, führt zu einem Lichtpunkt auf dem positionsempfindlichen Photodetektor, der sich mit einer Änderung der Winkellage des Target-Spiegels verlagert. Durch Erfassen dieser Verlagerung kann die Änderung der Winkellage erfasst werden. Gegenüber Translationen des Target-Spiegels ist der iQuAC hingegen unempfindlich.

Der IQuAC basiert auf einem bekannten optischen Autokollimator. Ein optischer Autokollimator zur Messung von Änderungen der Winkellage eines Target-Spiegels kollimiert von einer Punktlichtquelle kommendes Licht mit einer Linse und richtet das kollimierte Licht auf den Target-Spiegel. Das von dem Target-Spiegel reflektierte kollimierte Licht wird von derselben Linse auf einen positionsempfindlichen Photodetektor fokussiert. Autokollimatoren sprechen auf Winkelauslenkungen des Target-Spiegels an, wobei sie gegenüber Verlagerungen des Target-Spiegels unempfindlich sind. Autokollimatoren messen keinen Strahlwinkel eines von außen zugeführten Lichtstrahls.

Aus Park, J. und Cho, K.: "High-precision tilt sensor using a folded Mach-Zehnder geometry inphase and quadrature interferometer", Appl. Opt. Vol. 55, 2016, No. 9, S. 2155-2159, DOI: 10.1364/AO.55.002155, ist bei einem Verfahren zum Bestimmen der Neigung eines Target-Spiegels, wie es in den beiden letzten Absätzen erläutert wurde, bekannt, vor dem Fotodetektor eine fokussierende Linse anzuordnen, um den dynamischen Bereich des Verfahrens zu vergrößern.

Aus Hogan J. et al.: "Precision angle sensor using an optical lever inside a Sagnac interferometer", Opt. Lett. Vol. 36, 2011, No. 9, S.1698-1700, ist die Verwendung eines Sagnac-Interferometers zur Erfassung der Winkellage eines Spiegels im Aufbau des Interferometers bekannt. Zur Überwachung der Überlappung eines von dem Target-Spiegel abgelenkten Teilstrahls und eines als Referenz dienenden Teilstrahls werden die überlagerten Teilstrahlen zu einem kleinen Anteil auf eine CCD-Kamera gerichtet. Die Bestimmung der Verlagerung des Interferenzmusters mit dem Winkel des Target-Spiegels erfolgt mit Hilfe einer Vierquadrantendiode, auf die die überlagerten Teilstrahlen zu ihrem überwiegenden Anteil gerichtet werden.

Aus der US 2012 / 0 200 840 A1 ist ein Verfahren zum kontinuierlichen Messen des Brechungsindex eines Mediums bekannt, bei dem in einem Aufbau nach Art eines Michelson-Interferometers ein unter einem Winkel ungleich 90° durch Grenzflächen zu dem Medium geführter Lichtstrahl mit einem Referenzstrahl zu einem Interferenzmuster überlagert wird. Seitliche Abstände von Intensitätsmaxima des Interferenzmusters werden mit einer Kamera erfasst, um unterschiedliche Ablenkungswinkel des Lichtstrahls an den Grenzflächen zu messen.

Aus Putman, A. J. et al.: "A detailed analysis of the optical beam deflection technique for use in atomic force microscopy", Journal of Applied Physics Vol. 72, No. 6 (1992), ist ein Verfahren zur Bestimmung der Ablenkung eines Lichtstrahls in der Atomkraftmikroskopie bekannt. Dabei wird ein kollimierter Laserstrahl in zwei kollimierte Teilstrahlen aufgespalten, von denen einer an der Basis und einer am freien Ende eines durch die Atomkraft ausgelenkten Auslegers reflektiert wird und wobei die beiden reflektierten kollimierten Teilstrahlen anschließend mit Hilfe einer Linse zu einem Interferenzmuster überlagert werden. Eine Auslenkung einer Spitze an dem freien Ende des Auslegers führt zu einer Verlagerung des Interferenzmusters auf einem geteilten Detektor.

Aus der CN 108 020 179 A sind ein Verfahren und eine Vorrichtung zur Winkelmessung bekannt. Ein von einem Laser kommend in fester Richtung einfallender Laserstrahl wird in einen parallelen Laserstrahl aufgeweitet und dann mit Hilfe von zwei Strahlteilern in zwei Referenzstrahlen und einen von einem zu vermessenden Spiegel abgelenkten Messstrahl aufgeteilt. Mit einem weiteren Spiegel und zwei weiteren Strahlteilern werden die Referenzstrahlen und der Messstrahl zu einem Interferenzmuster auf einer Kamera überlagert. Aus der Verteilung der Lichtflecken des Interferenzmusters wird auf eine Winkeländerung des Messstrahls über die Fläche des zu vermessenden Spiegels und damit auch auf Planizitätsfehler des zu vermessenden Spiegels geschlossen.

Aus der US 2003/0160969 A1 ist eine Interferenzmessvorrichtung zum Messen einer Probe bekannt. Ein von einem Laser kommend in einer festen Richtung einfallender Laserstrahl wird mit Hilfe eines Teleskops aufgeweitet, und die Probe wird von einem Teil des aufgeweiteten kollimierten Laserstrahls durchleuchtet. Die Probe wird mit einem Linsensystem auf eine Beobachtungsebene abgebildet. Mit einem zwischen dem Linsensystem und der Beobachtungsebene angeordneten Interferenzelement wird der kohärente Strahl in zwei Teilstrahlen aufgespalten und in der Beobachtungsebene oder einer dazu äquivalenten Ebene zu einem Interferenzmuster auf einer Kamera überlagert. Aus dem mit der Kamera aufgenommenen Interferenzmuster wird eine Phasenverteilungsänderung durch die Probe bestimmt.

### AUFGABE DER ERFINDUNG

Der Erfindung liegt die Aufgabe zugrunde, ein Verfahren und eine Vorrichtung zum Erfassen von Richtungsänderungen eines kohärenten Lichtstrahls aufzuzeigen, die es mit vergleichsweise geringem apparativen Aufwand ermöglichen, einen Strahlwinkel des Lichtstrahls mit hoher Genauigkeit zu erfassen.

### LÖSUNG

Die Aufgabe der Erfindung wird durch ein Verfahren mit den Merkmalen des unabhängigen Patentanspruchs 1 und eine Vorrichtung mit den Merkmalen des unabhängigen Patentanspruchs 6 gelöst. Bevorzugte Ausführungsform des erfindungsgemäßen Verfahrens und der erfindungsgemäßen Vorrichtung sind in den abhängigen Patentansprüchen definiert.

### BESCHREIBUNG DER ERFINDUNG

Bei einem erfindungsgemäßen Verfahren zum Erfassen von Richtungsänderungen eines kollimierten kohärenten Lichtstrahls wird der Lichtstrahl in mindestens zwei Teilstrahlen aufgespalten. Die mindestens zwei Teilstrahlen werden zur Ausbildung eines Interferenzmusters überlagert, das in mindestens einer quer zur mittleren Ausbreitungsrichtung der mindestens zwei Teilstrahlen verlaufenden Querrichtung wechselweise aufeinanderfolgende Lichtintensitätsminima und Lichtintensitätsmaxima aufweist. Zumindest ein Teil des Interferenzmusters, der eine Vielzahl der Lichtintensitätsmaxima umfasst, wird mit einer Kamera registriert, und Lageänderungen der Lichtintensitätsmaxima gegenüber der Kamera werden aus den Bildern der Kamera ermittelt.

Indem die Lageänderungen einer Vielzahl von Lichtintensitätsmaxima gegenüber der Kamera ermittelt werden, erhöht sich die Genauigkeit, mit der Richtungsänderungen des kohärenten Lichtstrahls aufgrund von Lageänderungen des Interferenzmusters erfasst werden um einen Faktor >/N, wobei N die Anzahl der Lichtintensitätsmaxima ist. Damit ist sofort ersichtlich, dass eine große Anzahl N an Lichtintensitätsmaxima des Teils des Interferenzmusters, der mit der Kamera erfasst wird, vorteilhaft ist. Vorzugsweise beträgt die Zahl der registrierten Intensitätsmaxima mindestens 10, mehr bevorzugt mindestens 20, noch mehr bevorzugt mindestens 50 und am meisten bevorzugt mindestens 100. Es versteht sich, dass ein aus der Anzahl der mit der Kamera registrierten Intensitätsmaxima resultierender Abstand zwischen benachbarten Intensitätsmaxima auf die Dichte der Pixel der Kamera abzustimmen ist. Auf jede Periode des Interferenzmusters müssen für eine eindeutige Messung mehr als 2 Pixel fallen, vorzugsweise mehr als 3. Vorzugsweise entfallen auf jede Periode des Interferenzmusters in jeder Richtung mindestens 4 Pixel der Kamera. Entsprechend können mit einer Kamera, die in der relevanten Richtung 100 in einer Zeile oder einer Spalte benachbarte Pixel aufweist, bis zu 25 in dieser Richtung aufeinanderfolgende Intensitätsmaxima mit maximaler Empfindlichkeit bezüglich deren Lageänderungen registriert werden.

Bei dem erfindungsgemäßen Verfahren kann sich die vorteilhafterweise große Vielzahl der Lichtintensitätsmaxima nicht nur durch ihre Aneinanderreihung in der mindestens einen Querrichtung sondern in beiden quer zu der mittleren Ausbreitungsrichtung der mindestens zwei Teilstrahlen verlaufenden Querrichtungen und damit in beiden Haupterstreckungsrichtungen des Bildsensors der jeweiligen Kamera ergeben. Entsprechend können mit einer Kamera mit 100 × 100 Pixel bis zu 25 × 25 Lichtintensitätsmaxima ortsauflösend registriert werden.

Im Gegensatz zu dem eingangs gewürdigten Stand der Technik wird bei der vorliegenden Erfindung nicht die Richtungsänderung eines der beiden Teilstrahlen erfasst, in die der kohärente Lichtstrahl aufgespalten wird, sondern die Richtungsänderungen des Lichtstrahls selbst. Dazu wird der Lichtstrahl auch nicht mit einem Referenzstrahl überlagert, sondern in zwei Teilstrahlen aufgespalten, die grundsätzlich beide in gleichem Maße von den Richtungsänderungen des kohärenten Lichtstrahls betroffen sind. Diese beiden Teilstrahlen werden dann zu dem Interferenzmuster überlagert, das die Vielzahl der Lichtintensitätsmaxima umfasst und das mit der Kamera registriert wird.

Bei dem erfindungsgemäßen Verfahren ist der Lichtstrahl ein kollimierter Lichtstrahl, der in mindestens einen vor der Kamera liegenden Fokus fokussiert wird. Dadurch bildet sich das Interferenzmuster zwischen Kugelwellen aus, die von realen oder virtuellen Brennpunkten der Teilstrahlen ausgehen. Die relativen Abstände der Brennpunkte werden durch die Aufspaltung des Lichtstrahls in die mindestens zwei Teilstrahlen vorgegeben. Die absolute Lage der Brennpunkte und damit die Lage der Lichtintensitätsmaxima gegenüber der Kamera hängt von der Winkellage, d. h. dem Strahlwinkel des kollimierten Lichtstrahls gegenüber der fokussierenden Optik, aber nicht von seiner seitlichen Strahllage ab. Damit ist das erfindungsgemäße Verfahren selektiv sensitiv in Bezug auf die Winkellage, d. h. den Strahlwinkel des Lichtstrahls. Weiterhin erweist sich als vorteilhaft, dass die zu dem Interferenzmuster überlagerten Kugelwellen auch bei nur geringen relativen Abständen der Fokuspunkte bereits über eine kurze Entfernung von den Fokuspunkten zu einer zweidimensionalen Verteilung einer Vielzahl von Lichtintensitätsmaxima auf der Kamera führen.

Grundsätzlich kann der kollimierte Lichtstrahl auch erst nach seinem Aufspalten in die mindestens zwei Teilstrahlen in den Fokus fokussiert werden. Vorzugsweise erfolgt das Fokussieren jedoch schon vor dem Aufspalten in die mindestens zwei Teilstrahlen. Dies bedeutet jedoch nicht notwendigerweise, dass der Fokus auch noch vor dem Aufspalten in die mindestens zwei Teilstrahlen liegt. Wenn der Fokus vor dem Aufspalten in mindestens zwei Teilstrahlen liegt, weisen die Kugelwellen der Teilstrahlen unterschiedliche virtuelle Fokuspunkte als Ursprung auf. Wenn der Fokuspunkt nach dem Aufspalten liegt, handelt es sich um unterschiedliche reale Fokuspunkte.

Bei dem erfindungsgemäßen Verfahren wird eine mittlere Verschiebung der Vielzahl der Lichtintensitätsmaxima gegenüber der Kamera in der mindestens einen Querrichtung ermittelt und daraus auf eine Winkellageänderung in dieser Querrichtung geschlossen. Dies ist dann möglich, wenn das Interferenzmuster mit der Winkellageänderung in dieser mindestens einen Querrichtung "schiebt". Das ist insbesondere dann der Fall, wenn jeder der mindestens zwei Teilstrahlen im Rahmen des Aufspaltens des Lichtstrahls in die mindestens zwei Teilstrahlen und im Rahmen des Überlagerns der Teilstrahlen zur Ausbildung des Interferenzmusters nᵢ-mal reflektiert wird, wobei der Index i den jeweiligen Teilstrahl bezeichnet und wobei sich die Anzahlen n; der Reflektionen nicht oder um eine gerade ganze Anzahl unterscheiden. Mit jeder Reflektion der Teilstrahlen dreht sich die Richtung ihrer Winkellageänderung um. Wenn sich die Anzahlen dieser Richtungsdrehungen nicht oder nur um eine gerade ganze Zahl unterscheiden, sind zumindest die Richtungen der Winkellageänderungen beider Teilstrahlen gleich. Dies hat zur Folge, dass sich das Interferenzmuster mit einer Winkellageänderung des Lichtstrahls zumindest in erster Näherung nicht ändert, sondern in der gleichen Richtung der Winkellageänderungen beider Teilstrahlen verlagert.

Zusätzlich kann bei dem erfindungsgemäßen Verfahren eine Änderung eines mittleren Abstands der Vielzahl der Lichtintensitätsmaxima in der mindestens einen Querrichtung aus den Bildern der Kamera ermittelt werden. Ein gleichbleibender mittlerer Abstand der Vielzahl der Lichtintensitätsmaxima kann als Stabilitätskriterium bei der Durchführung des erfindungsgemäßen Verfahrens verwendet werden. Wenn der Lichtstrahl in zwei Teilstrahlen aufgespalten wird, wobei sich die Anzahl ihrer Reflektionen um eine ungerade ganze Zahl unterscheiden, schiebt das aus der Überlagerung der Teilstrahlen resultierende Interferenzmuster nicht als Ganzes mit einer Winkellageänderung des Lichtstrahls. Vielmehr ändert sich dann im Wesentlichen nur der mittlere Abstand der Intensitätsmaxima in der Richtung der Winkellageänderung. Eine besonders geringe Abhängigkeit des mittleren Abstands der Lichtintensitätsmaxima des Interferenzmusters und überhaupt der Form des Interferenzmusters ergibt sich umgekehrt in einem Zentralbereich der voranstehend erläuterten schiebenden Interferenzmuster. Vorzugsweise wird bei der Erfassung von Winkellageänderungen des Lichtstrahls mit Hilfe schiebender Interferenzmuster daher selektiv ein solcher Zentralbereich des jeweiligen Interferenzmusters mit der Kamera registriert. Die gleichzeitige zusätzliche Erfassung der Interferenz zweier Teilstrahlen mit ungerader Differenz von Spiegelungen auf demselben Bildsensor der Kamera erlaubt zusätzlich die Korrektur von Verschiebungen des Bildsensors selbst relativ zu den Teilstrahlen, die z. B. durch eine Erwärmung in der Kamera hervorgerufen werden.

Konkret können die mindestens zwei Teilstrahlen unter einem spitzen Winkel zwischen ihren jeweiligen mittleren Ausbreitungsrichtungen überlagert werden. Der spitze Winkel kann zwischen 0,3° und 30° und genauer zwischen 1° und 10° betragen. Der spitze Winkel bei der Überlagerung der Teilstrahlen lässt sich beispielsweise einfach dadurch realisieren, dass zum Aufspalten des Lichtstrahls in die mindestens zwei Teilstrahlen und zum Überlagern der mindestens zwei Teilstrahlen zu dem Interferenzmuster ein Interferometer verwendet wird, das durch Verkippen eines seiner Vollspiegel oder des Strahlteilers um die Hälfte des gewünschten spitzen Winkels dejustiert ist.

Ein Beispiel für ein zur Durchführung des erfindungsgemäßen Verfahrens verwendbares Interferometer ist ein Shear-Interferometer mit keilförmiger oder planparalleler Glasplatte, wobei eine planparallele Glasplatte des Shear-Interferometers das Fokussieren des Lichtstrahls erfordert. Ein weiteres Beispiel ist ein dejustiertes Sagnac-Interferometer, bei dem aber in der Regel die Fokussierung des Lichtstrahls erforderlich ist, um ein Interferenzmuster mit einer Vielzahl von Intensitätsmaxima in seinem Zentralbereich auf der Kamera auszubilden. Auch bei einem Michelson- oder Mach-Zehnder-Interferometer ist die Fokussierung des Lichtstrahls zusätzlich zu der notwendigen Dejustierung des Interferometers vorteilhaft. Weiterhin kann das erfindungsgemäße Verfahren mit einer dachförmigen oder pyramidenförmigen Glasplatte zum Aufspalten des Lichtstrahls in die mindestens zwei Teilstrahlen und zum Überlagern der mindestens zwei Teilstrahlen zu dem Interferenzmuster durchgeführt werden. Hier führt die Fokussierung des Lichtstrahls auch bei einer nur dachförmigen Glasplatte zu einer vorteilhaften zweidimensionalen Verteilung der Lichtintensitätsmaxima über der Kamera.

Das erfindungsgemäße Verfahren ist grundsätzlich nur zur Erfassung von Richtungsänderungen, das heißt insbesondere Änderungen der Winkellage des Lichtstrahls in den Richtungen geeignet, in denen der Lichtstrahl in die mindestens zwei Teilstrahlen aufgespalten und die Teilstrahlen dann zu dem Interferenzmuster überlagert werden, das heißt insbesondere in der mindestens einen Querrichtung, in der die Lichtintensitätsmaxima des Interferenzmusters aufeinander folgen. Um Änderungen der Winkellage des Lichtstrahls in allen Querrichtungen zu der Haupterstreckungsrichtung des Lichtstrahls zu erfassen, muss der Lichtstrahl entsprechend in mindestens drei Teilstrahlen aufgespalten werden. Drei Teilstrahlen können so überlagert werden, dass das Interferenzmuster eine hexagonale zweidimensionale Anordnung von Lichtintensitätsminima und -maxima aufweist. Vorzugsweise wird der Lichtstrahl in mindestens vier Teilstrahlen aufgespaltet, und zwar besonders bevorzugt in einer zweistufigen Aufspaltung, bei der der Lichtstrahl zunächst in zwei Teile aufgespalten wird, die dann nochmals jeweils in zwei Teilstrahlen aufgespalten werden, so dass insgesamt vier Teilstrahlen erhalten werden, die dann so überlagert werden, dass das Interferenzmuster in zwei zu der mittleren Ausbreitungsrichtung der vier Teilstrahlen und quer zueinander verlaufenden Querrichtungen aufeinanderfolgenden Lichtintensitätsminima und -maxima aufweist.

Gemäß einem anderen Aspekt des erfindungsgemäßen Verfahrens wird ein Teil des Lichtstrahls in die mindestens zwei Teilstrahlen aufgespalten, die zu dem Interferenzmuster überlagert werden, während ein weiterer Teil des Lichtstrahls in mindestens zwei weitere Teilstrahlen aufgespalten wird, die zu einem weiteren Interferenzmuster überlagert werden, das in mindestens einer weiteren quer zur mittleren Ausbreitungsrichtung der mindestens zwei weiteren Teilstrahlen verlaufenen Querrichtung aufeinanderfolgende weitere Lichtintensitätsminima und weitere Lichtintensitätsmaxima aufweist, wobei ein Teil des weiteren Interferenzmusters, der eine Vielzahl der weiteren Lichtintensitätsmaxima umfasst, mit der oder einer weiteren Kamera registriert wird. Während das Interferenzmuster mit den in der mindestens einen Querrichtung aufeinanderfolgenden Intensitätsmaxima Änderungen der Winkellage in der mindestens einen Querrichtung erfassbar macht, kann das weitere Interferenzmuster mit seinen in der mindestens einen weiteren Querrichtung aufeinanderfolgenden Lichtintensitätsmaxima Änderungen der Winkellage in der mindestens einen weiteren Querrichtung erfassbar machen. So können die Änderungen der Winkellage in zwei zueinander orthogonalen Querrichtungen separat erfasst werden. Das Interferenzmuster und das weitere Interferenzmuster können aber auch auf grundsätzlich unterschiedliche Weisen ausgebildet werden.

Beispielsweise können die mindestens zwei Teilstrahlen so überlagert werden, dass sich mit einer Richtungsänderung des Lichtstrahls in der mindestens einen Querrichtung die Intensitätsmaxima des Interferenzmusters gegenüber der Kamera gleichsinnig in der mindestens einen Querrichtung verschieben, während die mindestens zwei weiteren Teilstrahlen so überlagert werden, dass sich mit einer Richtungsänderung des Lichtstrahls in der weiteren Querrichtung die weiteren Intensitätsmaxima des weiteren Interferenzmusters gegenüber der oder der weiteren Kamera nicht oder gegensinnig in der weiteren Querrichtung verschieben. So kann das weitere Interferenzmuster dabei insbesondere zur Überwachung der Stabilität des optischen Aufbaus genutzt werden, mit dem das erfindungsgemäße Verfahren durchgeführt wird. Dabei kann zum Beispiel eine etwaige Verschiebung der Kamera bzw. deren Bildsensors relativ zu dem optischen Aufbau erfasst und die Messung diesbezüglich korrigiert werden.

Konkret kann zu dem Zweck, dass sich mit einer Richtungsänderung des Lichtstrahls in der mindestens einen weiteren Querrichtung die weiteren Intensitätsmaxima des weiteren Interferenzmusters nicht oder gegensinnig in der mindestens einen weiteren Querrichtung verschieben, der weitere Teil des Lichtstrahls in zwei weitere Teilstrahlen aufgespalten werden, die m₁-mal beziehungsweise m₂-mal reflektiert werden, wobei sich die Anzahlen m₁ und m₂ um eine ungerade ganze Zahl unterscheiden. Weiterhin kann das oder ein Interferometer, mit dem der weitere Teil des Lichtstrahls in die mindestens zwei weitere Teilstrahlen aufgespalten wird und die mindestens zwei weiteren Teilstrahlen zu dem weiteren Interferenzmuster überlagert werden, zur Ausbildung eines derartigen, nicht mit einer Richtungsänderung des Lichtstrahls "schiebenden" Interferenzmusters mindestens ein Dove-Prisma oder einen 50/50-Strahlteiler aufweisen, das beziehungsweise der sowohl zum Aufspalten in die beiden weiteren Teilstrahlen als auch zum Überlagern der beiden weiteren Teilstrahlen genutzt wird.

Das Interferenzmuster und das weitere Interferenzmuster können bei dem hier erläuterten Aspekt des erfindungsgemäßen Verfahrens nicht nur nebeneinander, das heißt räumlich getrennt auf ein und dieselbe Kamera abgebildet beziehungsweise auf dieser ausgebildet werden, sondern sie können dort auch überlagert werden, um ein Gesamtinterferenzmuster auszubilden, das sowohl Richtungsänderungen des Lichtstrahls als auch sonstige Änderungen des zu dem erfindungsgemäßen Verfahren verwendeten optischen Aufbaus anzeigen kann.

Eine erfindungsgemäße Vorrichtung zum Erfassen von Richtungsänderungen eines kollimierten kohärenten Lichtstrahls weist ein Interferometer, das zum Aufspalten des Lichtstrahls in mindestens zwei Teilstrahlen und zum Überlagern der mindestens zwei Teilstrahlen zur Ausbildung eines Interferenzmusters ausgebildet ist, welches in mindestens einer quer zur mittleren Ausbreitungsrichtung der mindestens zwei Teilstrahlen verlaufenden Querrichtung wechselweise aufeinanderfolgende Lichtintensitätsminima und Lichtintensitätsmaxima aufweist, und eine Kamera auf, die zumindest einen Teil des Interferenzmusters, der eine Vielzahl der Lichtintensitätsmaxima umfasst, registriert und die dazu ausgebildet ist, Lageänderungen der Lichtintensitätsmaxima gegenüber der Kamera zu erfassen.

Bei der erfindungsgemäßen Vorrichtung ist eine Fokussieroptik dazu ausgebildet und angeordnet, den kollimierten Lichtstrahl in mindestens einen vor der Kamera liegenden Fokus zu fokussieren. Diese Fokussieroptik kann insbesondere vor dem Interferometer, das heißt auf der der Kamera abgekehrten Seite des Interferometers angeordnet sein.

Die Kamera ist vorzugsweise dazu angeordnet, nicht das gesamte Interferenzmuster sondern nur einen Zentralbereich des Interferenzmusters zu erfassen, in dem die Intensitätsmaxima in der mindestens einen Querrichtung regelmäßig aufeinander folgen und der auch nach Richtungsänderungen, insbesondere Änderungen der Winkellage des Lichtstrahls, die Kamera vollständig abdeckt.

Insbesondere ist das Interferometer der erfindungsgemäßen Vorrichtung ein Shear-Interferometer mit keilförmiger oder planparalleler Glasplatte, ein dejustiertes Sagnac-Interferometer, ein dejustiertes Michelson-Interferometer oder ein dejustiertes Mach-Zehnder-Interferometer oder es weist eine dachförmige oder pyramidenförmige Glasplatte auf. Jedes der genannten Interferometer kann dazu ausgebildet sein, jeden der mindestens zwei Teilstrahlen nᵢ-mal zu reflektieren, wobei sich die Anzahl nᵢ der Reflektionen nicht oder um eine gerade ganze Zahl unterscheiden. Hieraus resultiert ein Interferenzmuster, das mit einer Änderung der Winkellage des Lichtstrahls in der Querrichtung der Änderung der Winkellage gegenüber der Kamera verlagert wird oder "schiebt". Dieses Schieben wird an jedem der Lichtintensitätsmaxima und dadurch mit einer um den Faktor √N erhöhten Genauigkeit erfasst, wobei N die Anzahl der Intensitätsmaxima ist.

Weiterhin kann das Interferometer dazu ausgebildet sein, den Lichtstrahl in vier Teilstrahlen aufzuspalten und diese vier Teilstrahlen so zu überlagern, dass das Interferenzmuster in zwei quer zu der mittleren Ausbreitungsrichtung der vier Teilstrahlen und quer zueinander verlaufenden Querrichtungen aufeinanderfolgenden Lichtintensitätsminima und Lichtintensitätsmaxima aufweist. So zeigen Lageveränderungen der Lichtintensitätsmaxima in den beiden Querrichtungen Richtungsänderungen des Lichtstrahls in beiden Querrichtungen zu seiner Haupterstreckungsrichtung an.

Alternativ oder zusätzlich kann das Interferometer dazu ausgebildet sein, einen Teil des Lichtstrahls in die mindestens zwei Teilstrahlen aufzuspalten, die es zu dem Interferenzmuster überlagert, während es einen weiteren Teil des Lichtstrahls in mindestens zwei weitere Teilstrahlen aufspaltet, die es zu einem weiteren Interferenzmuster überlagert, das in mindestens einer weiteren quer zur mittleren Ausbreitungsrichtung der mindestens zwei weiteren Teilstrahlen verlaufenden Querrichtung aufeinanderfolgende weitere Intensitätsmaxima und weitere Intensitätsminima aufweist, wobei die oder eine weitere Kamera zumindest einen Teil des weiteren Interferenzmusters, der eine Vielzahl der weiteren Lichtintensitätsmaxima umfasst, registriert. Dabei kann das Interferometer dazu ausgebildet sein, die mindestens zwei Teilstrahlen so zu überlagern, dass sich mit einer Richtungsänderung des Lichtstrahls in der mindestens einen Querrichtung die Intensitätsmaxima des Interferenzmusters gegenüber der Kamera gleichsinnig in der mindestens einen Querrichtung verschieben, während es die mindestens zwei weiteren Teilstrahlen so überlagert, dass sich mit einer Richtungsänderung des Lichtstrahls in der weiteren Querrichtung die weiteren Intensitätsmaxima des weiteren Interferenzmusters gegenüber der oder der weiteren Kamera nicht oder gegensinnig in der weiteren Querrichtung verschieben. Zu diesem Zweck kann das Interferometer dazu ausgebildet sein, den weiteren Teil des Lichtstrahls in zwei weiteren Teilstrahlen m₁-mal beziehungsweise m₂-mal zu reflektieren, wobei sich die Anzahl m₁ und m₂ um eine ungerade ganze Zahl unterscheiden. Dies kann mithilfe eines Dove-Prismas oder eines 50/50-Strahlteilers realisiert werden.

Das Interferometer kann weiterhin dazu ausgebildet sein, den Teil des Interferenzmusters und den Teil des weiteren Interferenzmusters nebeneinander oder aber einander zumindest teilweise überlappend auf ein und dieselbe Kamera abzubilden, wobei sich im Bereich der Überlappung ein Gesamtinterferenzmuster ausbildet.

Ein erfindungsgemäßer Strahlstabilisator zum Stabilisieren der Winkellage eines kollimierten kohärenten Lichtstrahls weist eine erfindungsgemäße Vorrichtung zum Erfassen von Richtungsänderungen des kollimierten kohärenten Lichtstrahls auf. Ein solcher Strahlstabilisator oder eine sonstige erfindungsgemäße Vorrichtung kann insbesondere in einem Laser-Scanning-Lichtmikroskop mit einem ein kollimierten kohärenten Lichtstrahl bereitstellenden Laser zur Anwendung kommen.

Wegen weiterer Details der erfindungsgemäßen Vorrichtung oder eines diese umfassenden Strahlstabilisator oder eines diese umfassenden Laser-Scanning-Lichtmikroskops wird auf die Ausführungsformen zu dem erfindungsgemäßen Verfahren verwiesen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer dachförmigen Glasplatte die Rede ist, ist dies so zu verstehen, dass genau eine dachförmige Glasplatte, zwei dachförmige Glasplatten oder mehr dachförmige Glasplatten vorhanden sind. Die in den Patentansprüchen angeführten Merkmale können durch andere Merkmale ergänzt werden oder die einzigen Merkmale sein, die das erfindungsgemäße Verfahren bzw. die erfindungsgemäße Vorrichtung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine erfindungsgemäße Vorrichtung zur Durchführung des erfindungsgemäßen Verfahrens.
- **Fig. 2**: zeigt eine Ausführungsform der erfindungsgemäßen Vorrichtung mit einem Shear-Interferometer als Teil eines Strahlstabilisators eines Laser-Scanning-Lichtmikroskops.
- **Fig. 3**: zeigt eine weitere Ausführungsform der erfindungsgemäßen Vorrichtung mit einem Shear-Interferometer mit keilförmiger Glasplatte.
- **Fig. 4**: zeigt eine Ausführungsform der erfindungsgemäßen Vorrichtung mit einer dachförmigen Glasplatte.
- **Fig. 5**: zeigt ein Interferenzmuster, das von einer Kamera der Ausführungsform der erfindungsgemäßen Vorrichtung gemäß Fig. 4 aufgenommen wurde.
- **Fig. 6**: zeigt ein Interferenzmuster, das von der Kamera einer Ausführungsform der erfindungsgemäßen Vorrichtung aufgenommen wurde, bei der die dachförmige Glasplatte gegenüber Fig. 4 um 90° verdreht wurde.
- **Fig. 7**: zeigt ein Interferenzmuster, das von der Kamera einer Ausführungsform der erfindungsgemäßen Vorrichtung aufgenommen wurde, die zwei aufeinanderfolgende, um 90° gegeneinander verdrehte dachförmige Glasplatten aufweist.
- **Fig. 8**: zeigt eine Ausführungsform der erfindungsgemäßen Vorrichtung mit einer dachförmigen Glasplatte und einer vorgeschalteten Fokussieroptik.
- **Fig. 9**: zeigt eine Ausführungsform der erfindungsgemäßen Vorrichtung mit einem Sagnac-Interferometer mit zwei Vollspiegeln und einer vorgeschalteten Fokussieroptik.
- **Fig. 10**: zeigt eine Ausführungsform der erfindungsgemäßen Vorrichtung mit einem Sagnac-Interferometer mit drei Vollspiegeln und einer vorgeschalteten Fokussieroptik.
- **Fig. 11**: zeigt eine Ausführungsform der erfindungsgemäßen Vorrichtung mit einem Michelson-Interferometer und einer vorgeschalteten Fokussieroptik.
- **Fig. 12**: zeigt eine Ausführungsform der erfindungsgemäßen Vorrichtung mit einem MachZehnder-Interferometer.
- **Fig. 13**: zeigt eine erfindungsgemäße Vorrichtung mit einem Dove-Prisma.
- **Fig. 14**: zeigt eine erfindungsgemäße Vorrichtung mit einem 50/50-Strahlteilerwürfel.
- **Fig. 15**: zeigt eine Ausführungsform der erfindungsgemäßen Vorrichtung mit einem 50/50-Strahlteilerprisma.

### FIGURENBESCHREIBUNG

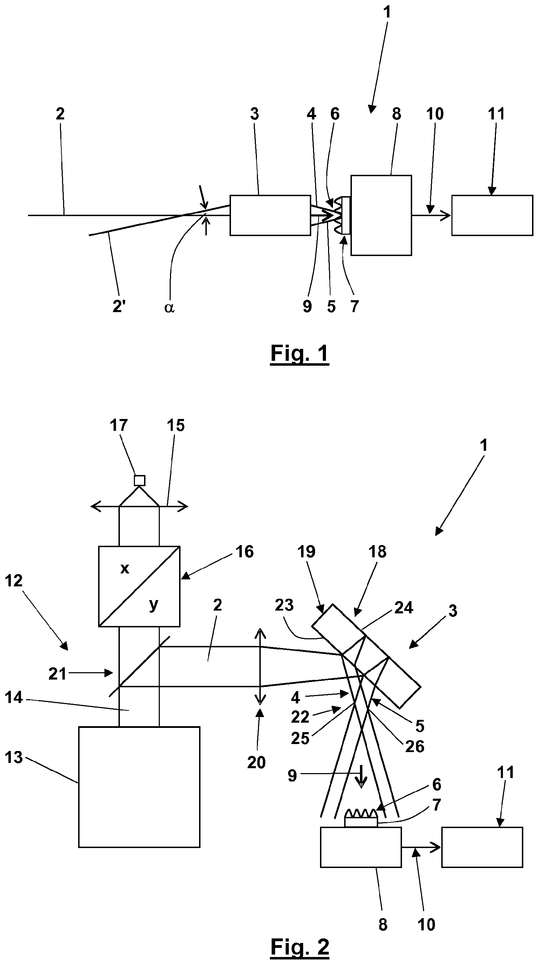

Die in **Fig. 1** illustrierte Vorrichtung 1 dient zur Erfassung von Richtungsänderungen eines kohärenten Lichtstrahls 2. Insbesondere geht es um eine Änderung der Winkellage des Lichtstrahls 2, die in Fig. 1 in Form eines Winkels α angedeutet ist, den der Lichtstrahl 2' gegenüber dem Lichtstrahl 2 aufweist. Die Vorrichtung 1 umfasst ein Interferometer 3, das den Lichtstrahl 2 in mindestens zwei Teilstrahlen 4 und 5 aufspaltet und diese Teilstrahlen 4 und 5 anschließend auf einem Bildsensor 7 einer Kamera 8 zu einem Interferenzmuster 6 überlagert. Das Interferenzmuster 6 weist in mindestens einer Querrichtung, die quer zu einer mittleren Ausbreitungsrichtung 9 der Teilstrahlen 4 und 5 verläuft, aufeinanderfolgende Lichtintensitätsminima und Lichtintensitätsmaxima auf, von denen eine Vielzahl auf dem Bildsensor 7 der Kamera 8 angeordnet ist. Der Bildsensor 7 erfasst diese Vielzahl von Lichtintensitätsmaxima insbesondere in einem Zentralbereich des Interferenzmusters 6. Bilder 10 der Kamera werden z. B. mit einem Computer 11 ausgewertet, um Lageänderungen der Lichtintensitätsmaxima gegenüber der Kamera 8 zu ermitteln und hieraus auf den Winkel α zu schließen.

**Fig. 2** skizziert Teile eines Laser-Scanning-Lichtmikroskops 12, bei dem ein Laser 13 den Lichtstrahl 2 in Form eines Laserstrahls 14 bereitstellt. Der Laserstrahl 14 wird mit einem Objektiv 15 fokussiert und mithilfe eines Scanners 16 in der Fokalebene des Objektivs 15 verlagert, um eine Probe 17 mit dem fokussierten Laserstrahl 14 abzutasten. Um den Strahlwinkel des Laserstrahls 14 zu überwachen und gegebenenfalls zu korrigieren, ist die erfindungsgemäße Vorrichtung 1 vorgesehen. Dabei umfasst ihr Interferometer 3 hier ein Shear-Interferometer 18 mit planparalleler Glasplatte 19, der eine Fokussieroptik 20 vorgeschaltet ist. Die Fokussieroptik 20 fokussiert einen mithilfe eines Strahlteilers 21 aus dem Laser-Scanning-Lichtmikroskop 12 ausgekoppelten Teil des Laserstrahls 14 als Lichtstrahl 2. Da der Fokus 22 der Fokussieroptik 20 hinter dem Shear-Interferometer 18 liegt, bilden die von der Vorderseite 23 und der Rückseite 24 der planparallelen Glasplatte 19 reflektierten Teilstrahlen 4 und 5 des Lichtstrahls 2 zwei Fokuspunkte 25 und 26 aus, von denen sich die Teilstrahlen 4 und 5 als überlappende Kugelwellen ausbreiten. So bilden sie auf dem Bildsensor 7 der Kamera 8 das Interferenzmuster 6 aus. Die Lichtintensitätsmaxima dieses Interferenzmusters 6 bewegen sich bei einer Richtungsänderung des Laserstrahls 14 in der Zeichenebene von Fig. 2 in einer gemeinsamen Querrichtung zu der mittleren Ausbreitungsrichtung 9 gegenüber der Kamera 8 in der Zeichenebene von Fig. 2. Dabei entspricht die Größe einer mittlere Verschiebung der Lichtintensitätsmaxima des Interferenzmusters 6 in erster Näherung bis auf einen Proportionalitätsfaktor dem Wert des Winkels α, um den der Laserstrahl 14 in der Zeichenebene von Fig. 2 verkippt wurde. Aufgrund der Fokussierung des kollimierten Laserstrahls 14 beziehungsweise des kollimierten Lichtstrahls 2 durch die Fokussieroptik 20 wirken sich laterale Verlagerungen des Laserstrahls 14 auf das Interferenzmuster 6, insbesondere auf dessen Zentralbereich, in erster Näherung nicht aus. Vielmehr ist die Vorrichtung 1 im Wesentlichen ausschließlich empfindlich gegenüber Winkellageänderungen des Laserstrahls 14. Wenn durch den Scanner 16 eingeführte Strahlwinkel ebenfalls mit der erfindungsgemäßen Vorrichtung 1 erfasst und gegebenenfalls korrigiert werden sollen, kann der Scanner 16 auch zwischen dem Strahlteiler 21 und dem Laser 13 angeordnet werden.

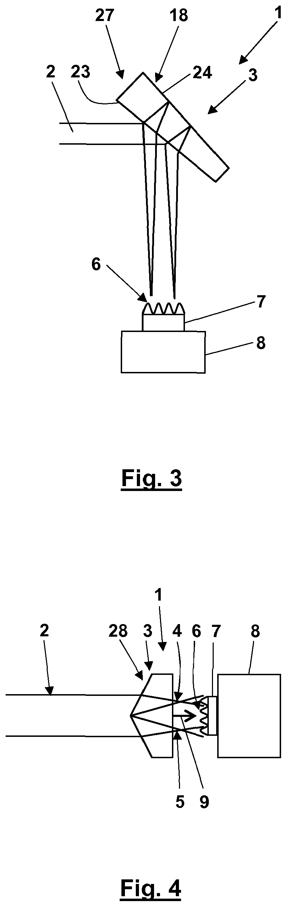

**Fig. 3** skizziert eine weitere Ausführungsform der Vorrichtung 1 auf Basis eines Shear-Interferometers 18. Dieses weist eine keilförmige Glasplatte 27 auf und kommt deshalb ohne die Fokussieroptik 20 aus. Dennoch könnte auch hier die Fokussieroptik 20 vorgesehen sein, um die Vorrichtung 1 ausschließlich für Winkellageänderungen des Lichtstrahls 2 empfindlich zu machen.

**Fig. 4** illustriert eine Ausführungsform der Vorrichtung 1 basierend auf einer dachförmigen Glasplatte 28, die den Lichtstrahl 2 in die Teilstrahlen 4 und 5 aufspaltet und die Teilstrahlen 4 und 5 zu dem Interferenzmuster 6 überlagert.

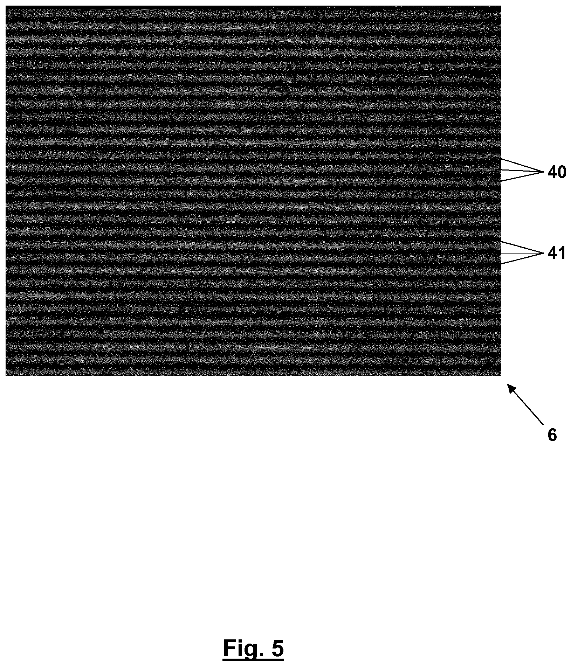

**Fig. 5** zeigt das Interferenzmuster 6, das von der Kamera 8 der Vorrichtung 1 gemäß Fig. 4 aufgezeichnet wird. Es besteht aus einer Vielzahl von streifenförmigen Intensitätsmaxima 40 und Intensitätsminima 41, die parallel zu einem First der dachförmigen Glasplatte 28 gemäß Fig. 4 verlaufen.

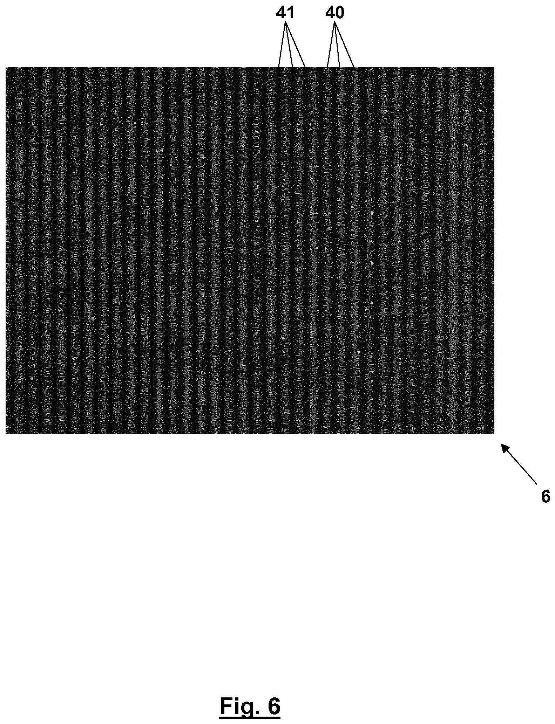

**Fig. 6** zeigt ein Interferenzmuster 6, wie es von der Kamera 8 gemäß Fig. 4 aufgezeichnet wird, wenn die dachförmige Glasplatte 28 um 90° um die mittlere Ausbreitungsrichtung 9 verdreht wird. Entsprechend verlaufen die streifenförmigen Intensitätsmaxima 40 und Intensitätsminima 41 quer zu den streifenförmigen Intensitätsmaxima 40 und Intensitätsminima 41 gemäß Fig. 5.

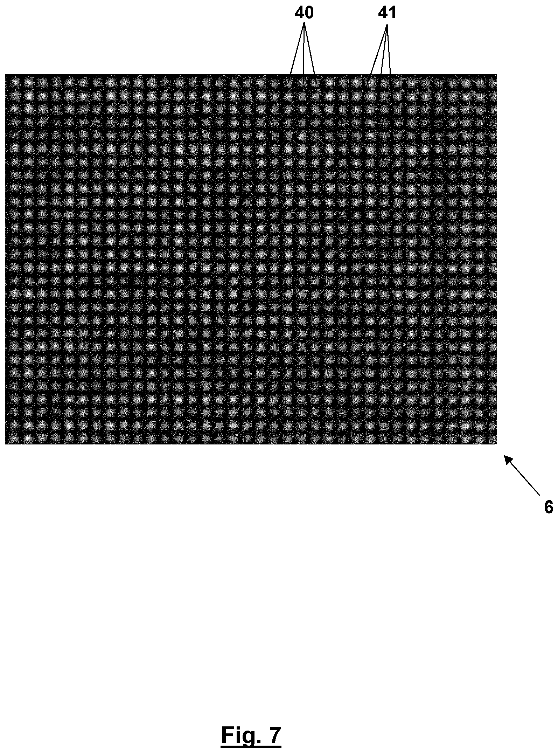

**Fig. 7** zeigt ein Interferenzmuster 6, das sich dann ergibt, wenn bei der Ausführungsform der erfindungsgemäßen Vorrichtung 1 gemäß Fig. 4 zwei um 90° um die mittlere Ausbreitungsrichtung 9 zueinander verdrehte dachförmige Glasplatten 28 vor der Kamera 8 angeordnet sind, so dass die Dachfirste der dachförmigen Glasplatten in einer Projektion längs der mittleren Ausbreitungsrichtung 9 orthogonal zueinander verlaufen. Hieraus resultieren punktförmige Intensitätsmaxima 40, die von einem Gitter aus Intensitätsminima 41 umgeben sind. Die Lage der Intensitätsmaxima 40 in dem Interferenzmuster 6 bzw. gegenüber der Kamera 8 ändert sich mit dem Strahlwinkel des Lichtstrahls 2, und zwar in derselben Richtung.

Statt zwei hintereinander angeordnete dachförmige Glasplatten, um den Lichtstrahl 2 in zwei zueinander orthogonalen Querrichtungen in insgesamt vier Teilstrahlen aufzuspalten und die vier Teilstrahlen dann zu dem Interferenzmuster zu überlagern, um die Richtungsänderungen des Lichtstrahls 2 nicht nur in der einen sondern auch der dazu orthogonal verlaufenden weiteren Querrichtung zu erfassen, kann bei der Vorrichtung 1 gemäß Fig. 4 an der Stelle der dachförmigen Glasplatte 28 eine pyramidenförmige Glasplatte Verwendung finden.

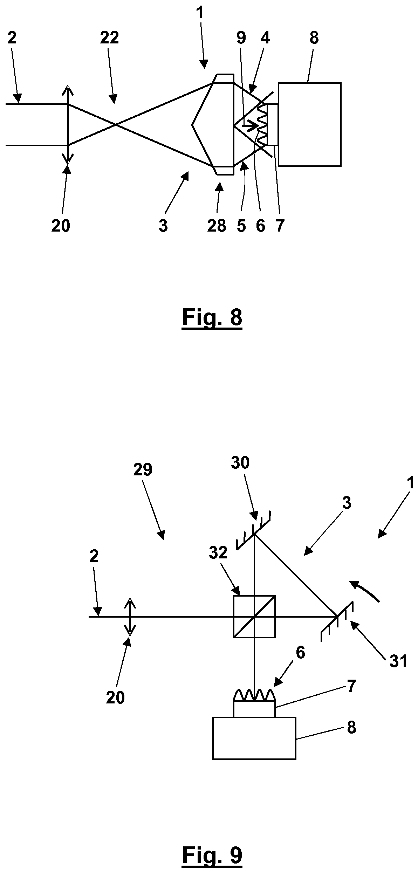

Wie **Fig. 8** zeigt, kann die dachförmige Glasplatte 28 mit einer Fokussieroptik 20 kombiniert werden, deren Fokus 22 hier vor der dachförmigen Glasplatte 28 liegt, um einerseits die Vorrichtung 1 nur empfindlich gegenüber Winkellageänderungen des Lichtstrahls 2 zu machen und andererseits den effektiven Strahlquerschnitt der Lichtstrahlen 4 und 5 bei ihrer Überlagerung zu dem Interferenzmuster 6 zu vergrößern. Hierdurch ergibt sich eine größere Anzahl von Intensitätsmaxima in dem mit dem Bildsensor 7 erfassten Zentralbereich des Interferenzmusters 6.

**Fig. 9** zeigt eine Ausführungsform der Vorrichtung 1 basierend auf einem Sagnac-Interferometer 29 mit zwei Vollspiegeln 30 und 31 neben einem Strahlteiler 32. Einer der Vollspiegel 31 ist dabei wie ein Drehpfeil andeutet dejustiert, um das Interferenzmuster 6 mit der Vielzahl von Lichtintensitätsmaxima auf dem Bildsensor 7 der Kamera 8 auszubilden, welches sich bei einem perfekt justierten Sagnac-Interferometer 29 nicht ausbilden würde. Die Ausbildung eines großflächigen Interferenzmusters 6, bei dem eine synchrone Lageänderung der Lichtintensitätsmaxima in einer Querrichtung eine Winkellageänderung des einfallenden Lichtstrahls 2 in der Querrichtung selektiv anzeigt, wird mithilfe der dem Sagnac-Interferometer 29 vorgeschalteten Fokussieroptik 20 erreicht.

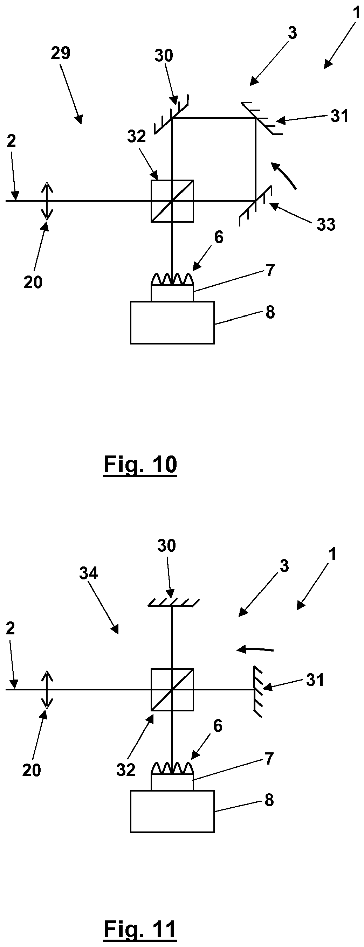

**Fig. 10** zeigt eine Ausführungsform der Vorrichtung 1 mit einem Sagnac-Interferometer 29 mit drei Vollspiegeln 30, 31 und 33 neben dem Strahlteiler 32, wobei hier der Vollspiegel 33 etwas verkippt ist, damit sich das Interferenzmuster 6 auf dem Bildsensor 7 der Kamera 8 ausbildet. Aus den im Zusammenhang mit Fig. 9 erläuterten Gründen ist auch diesem Sagnac-Interferometer 29 die Fokussieroptik 20 vorgeschaltet.

**Fig. 11** zeigt eine Ausführungsform der Vorrichtung 1 basierend auf einem Michelson-Interferometer mit 2 Vollspiegeln 30 und 31, von denen der Vollspiegel 31 dejustiert ist, neben einem Strahlteiler 32. Auch hier bildet sich das Interferenzmuster 6 aufgrund der Dejustage des Vollspiegels 31 auf dem Bildsensor 7 aus, und dem Michelson-Interferometer 24 ist die Fokussieroptik 20 vorgeschaltet, um die Vorrichtung 1 selektiv für Winkellageänderungen des Lichtstrahls 2 empfindlich zu machen und die Ausbildung eines großflächigen Interferenzmusters 6 zu erleichtern.

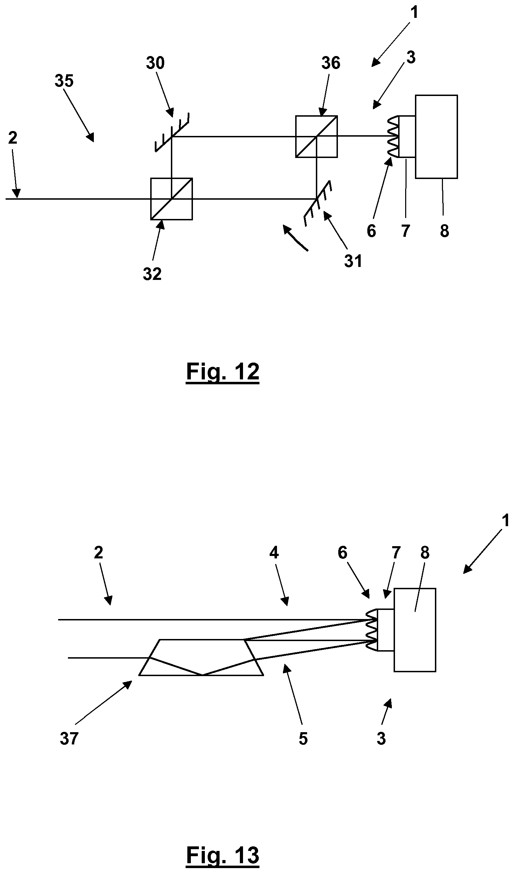

Auch bei der Vorrichtung 1 gemäß Fig. 12, die auf einem Mach-Zehnder-Interferometer 35 basiert, könnte dem Interferometer 3 eine Fokussieroptik 20 vorgeschaltet sein. Dies ist hier aber nicht der Fall. Das Mach-Zehnder-Interferometer 35 weist neben einem eingangsseitigen Strahlteiler 32 und zwei Vollspiegeln 30 und 31, von denen der Vollspiegel 31 dejustiert ist, um das Interferenzmuster 6 auf dem Bildsensor 7 der Kamera 8 auszubilden, einen zusätzlichen ausgangsseitigen Strahlteiler 36 in grundsätzlich bekannter Anordnung auf.

Bei der Vorrichtung 1 gemäß Fig. 13 ist ein Dove-Prisma 37 so angeordnet, dass es die Hälfte des Strahlquerschnitts des Lichtstrahls 2 erfasst und den entsprechenden Teilstrahl 5 selektiv ablenkt und mit dem anderen Teilstrahl 4 zu dem Interferenzmuster 6 auf dem Bildsensor 7 der Kamera 8 überlagert. Das Interferenzmuster 6 verlagert sich in diesem Fall aber nicht insgesamt in der Querrichtung, in der sich eine Richtungsänderung des Lichtstrahls 2 ergibt. Vielmehr ändert sich der Abstand der Intensitätsmaxima in dieser Querrichtung mit der Richtungsänderung des Lichtstrahls 2. Die mittlere Lage der Lichtintensitätsmaxima gegenüber der Kamera 8 bleibt dabei zumindest im Wesentlichen gleich.

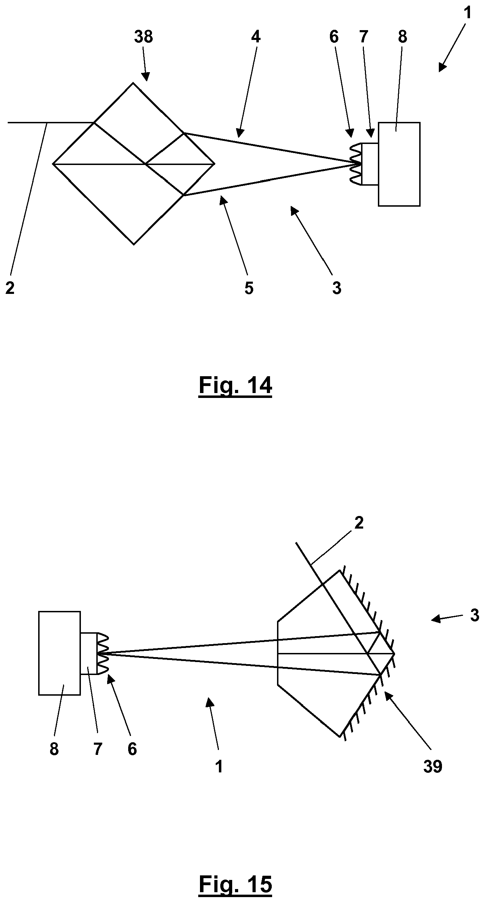

Dasselbe Verhalten zeigt das Interferenzmuster6, das in der Vorrichtung 1 gemäß **Fig. 14** mithilfe eines 50/50-Strahlteilerwürfels 38 erzeugt wird, und auch das Interferenzmuster 6, das in der Vorrichtung 1 gemäß **Fig. 15** mithilfe eines 50/50-Strahlteilerprismas 39 erzeugt wird. Eine Ausführungsform der Vorrichtung 1 gemäß den Fig. 13 bis 15 kann insbesondere zusätzlich zu einer der Ausführungsformen gemäß den Fig. 2 bis 4 und 8 bis 12 vorgesehen sein, um ein weiteres Interferenzmuster auf derselben oder einer weiteren Kamera 8 als Referenz auszubilden. Dieses weitere Interferenzmuster kann auch mit dem Interferenzmuster 6 einer Vorrichtung 1 gemäß den Fig. 2 bis 4 und 8 bis 12 auf der Kamera 8 zu einem Gesamtinterferenzmuster überlagert werden.

### BEZUGSZEICHENLISTE

- 1: Vorrichtung
- 2: Lichtstrahl
- 3: Interferometer
- 4: Teilstrahl
- 5: Teilstrahl
- 6: Interferenzmuster
- 7: Bildsensor der Kamera 8
- 8: Kamera
- 9: mittlere Ausbreitungsrichtung
- 10: Bilder
- 11: Computer
- 12: Laser-Scanning-Lichtmikroskop
- 13: Laser
- 14: Laserstrahl
- 15: Objektiv
- 16: Scanner
- 17: Probe
- 18: Shear-Interferometer
- 19: planparallele Glasplatte
- 20: Fokussieroptik
- 21: Strahlteiler
- 22: Fokus
- 23: Vorderseite
- 24: Rückseite
- 25: Fokuspunkt
- 26: Fokuspunkt
- 27: keilförmige Glasplatte
- 28: dachförmige Glasplatte
- 29: Sagnac-Interferometer
- 30: Vollspiegel
- 31: Vollspiegel
- 32: Strahlteiler
- 33: Vollspiegel
- 34: Michelson-Interferometer
- 35: Mach-Zehnder-Interferometer
- 36: Strahlteiler
- 37: Dove-Prisma
- 38: 50/50-Strahlteilerwürfel
- 39: 50/50-Strahlteilerprisma
- 40: Intensitätsmaximum
- 41: Intensitätsminimum

## Patentansprüche

1. Verfahren zum Erfassen von Richtungsänderungen eines kollimierten kohärenten Lichtstrahls (2),
- wobei mindestens zwei Teilstrahlen (4, 5) zur Ausbildung eines Interferenzmusters (6), das in mindestens einer quer zur mittleren Ausbreitungsrichtung (9) der mindestens zwei Teilstrahlen (4, 5) verlaufenden Querrichtung wechselweise aufeinander folgende Lichtintensitätsminima und Lichtintensitätsmaxima aufweist, überlagert werden,
- wobei zumindest ein Teil des Interferenzmusters (6), der eine Vielzahl der Lichtintensitätsmaxima umfasst, mit einer Kamera (8) registriert wird und
- wobei Lageänderungen der Lichtintensitätsmaxima gegenüber der Kamera (8) aus den Bildern (10) der Kamera (8) ermittelt werden,
**dadurch gekennzeichnet,**
- **dass** der kollimierte kohärente Lichtstrahl (2) mit den zu erfassenden Richtungsänderungen in die mindestens zwei Teilstrahlen (4, 5) aufgespalten wird,
- **dass** der kollimierte kohärente Lichtstrahl (2) in mindestens einen vor der Kamera (8) liegenden Fokus (22) fokussiert wird,
- **dass** eine mittlere Verschiebung der Vielzahl der Lichtintensitätsmaxima gegenüber der Kamera (8) in der mindestens einen Querrichtung ermittelt wird und
- **dass** aus der mittleren Verschiebung der Vielzahl der Lichtintensitätsmaxima gegenüber der Kamera (8) in der mindestens einen Querrichtung auf eine Winkellageänderung des kollimierten kohärenten Lichtstrahls (2) in dieser Querrichtung geschlossen wird.

2. Verfahren nach Anspruch 1, **dadurch gekennzeichnet, dass** jeder der mindestens zwei Teilstrahlen (4, 5) nᵢ-mal reflektiert wird, wobei sich die Anzahlen nᵢ der Reflektionen nicht oder um ein gerade ganze Zahl unterscheiden.

3. Verfahren nach einem der vorhergehenden Ansprüche, **dadurch gekennzeichnet, dass** zusätzlich eine Änderung eines mittleren Abstands der Vielzahl der Lichtintensitätsmaxima in der mindestens einen Querrichtung aus den Bildern (10) der Kamera (8) ermittelt wird.

4. Verfahren nach einem der vorhergehenden Ansprüche, **dadurch gekennzeichnet, dass** die mindestens zwei Teilstrahlen (4, 5) unter einem spitzen Winkel zwischen ihren jeweiligen mittleren Ausbreitungsrichtungen überlagert werden, wobei der spitze Winkel zwischen 0,3° und 30° und vorzugsweise zwischen 1° und 10° beträgt.

5. Verfahren nach einem der vorhergehenden Ansprüche, **dadurch gekennzeichnet, dass** der Lichtstrahl (2) in vier Teilstrahlen aufgespalten wird, die so überlagert werden, dass das Interferenzmuster (6) in zwei quer zu der mittleren Ausbreitungsrichtung (9) der vier Teilstrahlen und quer zueinander verlaufenden Querrichtungen aufeinander folgende Lichtintensitätsminima und Lichtintensitätsmaxima aufweist.

6. Vorrichtung (1) zum Erfassen von Richtungsänderungen eines kollimierten kohärenten Lichtstrahls (2), mit
- einem Interferometer (3), das zum Überlagern von mindestens zwei Teilstrahlen (4, 5) zur Ausbildung eines Interferenzmusters (6), das in mindestens einer quer zur mittleren Ausbreitungsrichtung (9) der mindestens zwei Teilstrahlen (4, 5) verlaufenden Querrichtung wechselweise aufeinander folgende Lichtintensitätsminima und Lichtintensitätsmaxima aufweist, ausgebildet ist,
- einer Kamera (8), die zumindest einen Teil des Interferenzmusters (6), der eine Vielzahl der Lichtintensitätsmaxima umfasst, registriert, und
- einer Auswerteeinrichtung, die dazu ausgebildet ist, Lageänderungen der Lichtintensitätsmaxima gegenüber der Kamera (8) aus den Bildern (10) der Kamera (8) zu ermitteln,
**dadurch gekennzeichnet,**
- **dass** das Interferometer (3) zum Aufspalten des kollimierten kohärenten Lichtstrahls (2) mit den zu erfassenden Richtungsänderungen in die mindestens zwei Teilstrahlen (4, 5) ausgebildet und angeordnet ist,
- **dass** eine Fokussieroptik (20) der Vorrichtung (1) dazu ausgebildet und angeordnet ist, den kollimierten Lichtstrahl (2) in mindestens einen vor der Kamera (8) liegenden Fokus (22) zu fokussieren,
- **dass** die Auswerteeinrichtung dazu ausgebildet ist, eine mittlere Verschiebung der Vielzahl der Lichtintensitätsmaxima gegenüber der Kamera (8) in der mindestens einen Querrichtung aus den Bildern (10) der Kamera (8) zu ermitteln, und
- **dass** die Auswerteeinrichtung dazu ausgebildet ist, aus der mittleren Verschiebung der Vielzahl der Lichtintensitätsmaxima gegenüber der Kamera in der mindestens einen Querrichtung auf eine Winkellageänderung des kollimierten kohärenten Lichtstrahls in dieser Querrichtung zu schließen.

7. Vorrichtung (1) nach Anspruch 6, **dadurch gekennzeichnet, dass** das Interferometer (3) mindestens
- ein Shear-Interferometer (18) mit keilförmiger (27) oder planparalleler Glasplatte (19),
- ein dejustiertes Sagnac-Interferometer (29),
- ein dejustiertes Michelson-Interferometer (34),
- ein dejustiertes Mach-Zehnder- Interferometer (35),
- eine dachförmige Glasplatte (28) oder
- eine pyramidenförmigen Glasplatte
aufweist.

8. Vorrichtung (1) nach einem der Ansprüche 6 und 7, **dadurch gekennzeichnet, dass** das Interferometer (3) dazu ausgebildet ist, jeden der mindestens zwei Teilstrahlen (4, 5) nᵢ-mal zu reflektieren, wobei sich die Anzahlen nᵢ der Reflektionen nicht oder um ein gerade ganze Zahl unterscheiden.

9. Vorrichtung (1) nach einem der Ansprüche 6 bis 8, **dadurch gekennzeichnet, dass** das Interferometer (3) dazu ausgebildet ist, den Lichtstrahl (2) in vier Teilstrahlen aufzuspalten und so zu überlagern, dass das Interferenzmuster (6) in zwei quer zu der mittleren Ausbreitungsrichtung (9) der vier Teilstrahlen und quer zueinander verlaufenden Querrichtungen aufeinander folgende Lichtintensitätsminima und Lichtintensitätsmaxima aufweist.

10. Vorrichtung (1) nach einem der Ansprüche 6 bis 9, **dadurch gekennzeichnet, dass** das Interferometer (3) dazu ausgebildet ist, einen Teil des Lichtstrahls (2) in die mindestens zwei Teilstrahlen (4, 5) aufzuspalten, die es zu dem Interferenzmuster (6) überlagert, während es einen weiteren Teil des Lichtstrahls (2) in mindestens zwei weitere Teilstrahlen aufspaltet, die es zu einem weiteren Interferenzmuster, das in mindestens einer weiteren quer zur mittleren Ausbreitungsrichtung (9) der mindestens zwei weiteren Teilstrahlen verlaufenden Querrichtung aufeinander folgende weitere Lichtintensitätsminima und weitere Lichtintensitätsmaxima aufweist, überlagert, wobei die oder eine weitere Kamera (8) zumindest einen Teil des weiteren Interferenzmusters, der eine Vielzahl der weiteren Lichtintensitätsmaxima umfasst, registriert.

11. Vorrichtung (1) nach Anspruch 10, **dadurch gekennzeichnet, dass** das Interferometer (3) dazu ausgebildet ist, die mindestens zwei Teilstrahlen (4, 5) so zu überlagern, dass sich mit einer Richtungsänderung des Lichtstrahls (2) in der mindestens einen Querrichtung die Intensitätsmaxima des Interferenzmusters (6) gegenüber der Kamera (8) gleichsinnig in der mindestens einen Querrichtung verschieben, während es die mindestens zwei weiteren Teilstrahlen so überlagert, dass sich mit einer Richtungsänderung des Lichtstrahls (2) in der weiteren Querrichtung die weiteren Intensitätsmaxima des weiteren Interferenzmusters gegenüber der oder der weiteren Kamera (8) nicht oder gegensinnig in der weiteren Querrichtung verschieben.

12. Vorrichtung (1) nach Anspruch 11, **dadurch gekennzeichnet, dass** das Interferometer (3) dazu ausgebildet ist, den weiteren Teil des Lichtstrahls (2) in zwei weitere Teilstrahlen aufzuspalten und die zwei weiteren Teilstrahlen m₁-mal bzw. m₂-mal zu reflektieren, wobei sich die Anzahlen m₁ und m₂ um eine ungerade ganze Zahl unterscheiden.

13. Vorrichtung (1) nach Anspruch 11 oder 12, **dadurch gekennzeichnet, dass** das Interferometer (3) zum Aufspalten des weiteren Teils des Lichtstrahls (2) in die mindestens zwei weiteren Teilstrahlen und zum Überlagern der mindestens zwei weiteren Teilstrahlen zu dem weiteren Interferenzmuster mindestens
- ein Dove-Prisma (37) oder
- einen 50/50-Strahteiler (38, 39)
aufweist.

14. Strahlstabilisator zum Stabilisieren der Winkellage eines kollimierten kohärenten Lichtstrahls (2) mit einer Vorrichtung (1) nach einem der Ansprüche 6 bis 13 zum Erfassen von Richtungsänderungen des kollimierten kohärenten Lichtstrahls (2).

15. Laser-Scanning-Lichtmikroskop (12) mit einem einen kollimierten kohärenten Lichtstrahl (2) bereitstellenden Laser (13) und mit einem Strahlstabilisator nach Anspruch 14 oder einer Vorrichtung (1) nach einem der Ansprüche 6 bis 13 für den kollimierten kohärenten Lichtstrahl (2).

## Claims

1. Method of detecting changes in direction of a collimated coherent light beam (2),
- wherein at least two partial beams (4, 5) are superimposed for forming an interference pattern (6) which comprises light intensity minima and light intensity maxima alternatingly following to one another in at least one transvers direction running transversely to an average propagation direction (9) of the at least two partial beams (4, 5),
- wherein at least a part of the interference pattern (6) that includes a plurality of the light intensity maxima is registered with a camera (8), and
- wherein changes in position of the light intensity maxima with respect to the camera (8) are determined from the pictures (10) of the camera (8),
**characterized in**
- **that** the collimated coherent light beam (2) with the changes in direction to be determined is split into the at least two partial beams (4, 5),
- **that** the collimated coherent light beam (2) is focused into a focus (22) located in front of the camera (8),
- **that** an average shift of the plurality of the light intensity maxima with respect to the camera (8) is determined in the at least one transvers direction, and
- **that** a change in angular position of the collimated coherent light beam (2) in the at least one transvers direction is deduced from the average shift of the plurality of light intensity maxima with respect to the camera (8) in this transvers direction.

2. Method of claim 1, **characterized in that** each of the at least two partial beams (4, 5) is reflected nᵢ-times, wherein the numbers nᵢ of the reflections do not differ or differ by an even integer.

3. Method of any of the preceding claims, **characterized in that**, additionally, a variation of an average distance of the plurality of light intensity maxima in the at least one transvers direction is determined from the pictures (10) of the camera (8).

4. Method of any of the preceding claims, **characterized in that** the at least two partial beams (4, 5) are superimposed at an acute angle between their respective average propagation directions, wherein the acute angle is between 0.3° and 30° and preferably between 1° and 10°.

5. Method of any of the preceding claims, **characterized in that** the light beam (2) is split into four partial beams which are superimposed such that the interference pattern (6) comprises light intensity maxima and light intensity minima following to one another in two transvers directions running transversely to the average propagation direction (9) of the four partial beams and transversely with regard to one another.

6. Apparatus (1) for detecting changes in direction of a collimated coherent light beam (2), comprising
- an interferometer (3) configured for superimposing at least two partial beams (4, 5) for forming an interference pattern (6) which comprises light intensity minima and light intensity maxima alternatingly following to one another in at least one transvers direction running transversely to an average propagation direction (9) of the at least two partial beams (4, 5),
- a camera (8) which registers at least a part of the interference pattern (6) that includes a plurality of the light intensity maxima, and
- an evaluation device configured for determining changes in position of the light intensity maxima with respect to the camera (8) from the pictures (10) of the camera (8),
**characterized in**
- **that** the interferometer (3) is configured and arranged for splitting the collimated coherent light beam (2) with the changes in direction to be determined into the at least two partial beams (4, 5),
- **that** a focusing optic (20) of the apparatus (1) is configured and arranged for focusing the collimated light beam (2) into at least one focus (22) located in front of the camera (8),
- **that** the evaluation device is configured for determining an average shift of the plurality of the light intensity maxima with respect to the camera (8) in the at least one transvers direction from the pictures (10) of the camera (8), and
- **that** the evaluation device is configured for deducing a change in angular position of the collimated coherent light beam in the at least one transvers direction from the average shift of the plurality of light intensity maxima with respect to the camera in this transvers direction.

7. Apparatus (1) of claim 6, **characterized in that** the interferometer (3) comprises at least
- a Shear-interferometer (18) having a wedge-shaped (27) or plane-parallel glass plate (19),
- a maladjusted Sagnac-interferometer (29),
- a maladjusted Michelson-interferometer (34),
- a maladjusted Mach-Zehnder-interferometer (35),
- a roof-shaped glass plate (28), or
- a pyramid-shaped glass plate.

8. Apparatus (1) of any of the claims 6 and 7, **characterized in that** the interferometer (3) is configured for reflecting each of the at least two partial beams (4, 5) n-times, wherein the numbers nᵢ of the reflections do not differ or differ by an even integer.

9. Apparatus (1) of any of the claims 6 to 8, **characterized in that** the interferometer (3) is configured for splitting the light beam (2) into four partial beams and for superimposing such that the interference pattern (6) comprises light intensity minima and light intensity maxima following to one another in two transvers directions running transversely to the average propagation direction (9) of the four partial beams and transversely to one another.

10. Apparatus (1) of any of the claims 6 to 9, **characterized in that** the interferometer (3) is configured for splitting a part of the light beam (2) into the at least two partial beams (4, 5) which it superimposes to form the interference pattern (6), whereas it splits a further part of the light beam (2) into two further partial beams which it superimposes to form a further interference pattern which comprises further light intensity minima and further light intensity maxima following to one another in at least one further transvers direction running transversely to an average propagation direction (9) of the at least two further partial beams, wherein the or a further camera (8) registers at least a part of the further interference pattern that comprises a plurality of the further light intensity maxima.

11. Apparatus (1) of claim 10, **characterized in that** the interferometer (3) is configured for superimposing the at least two partial beams (4, 5) such that, with a change in direction of the light beam (2) in the at least one transvers direction, the intensity maxima of the interference pattern (6) are shifted in a same sense in the at least one transvers direction with respect to the camera (8), whereas its superimposes the two further partial beams such that the further intensity maxima of the further interference pattern, with a change in direction of the light beam (2) in the further transvers direction, are not shifted or shifted in opposite senses in the further transvers direction with respect to the or the further camera (8).

12. Apparatus (1) of claim 11, **characterized in that** the interferometer (3) is configured for splitting the further part of the light beam (2) into two further light beams and to reflect the two further light beams m₁-times or m₂-times, wherein the numbers m₁ and m₂ differ by an uneven integer.

13. Apparatus (1) of claim 11 or 12, **characterized in that** the interferometer (3) comprises at least
- a Dove-prism (37) or
- a 50/50-beam splitter (38, 39)
for splitting the further part of the light beam (2) into the at least two further light beams and for superimposing the at least two further light beams to form the further interference pattern.

14. Beam stabilator for stabilizing the angular position of a collimated coherent light beam (2) comprising an apparatus (1) of any of the claims 6 to 13 for determining changes in direction of the collimated coherent light beam (2).

15. Laser-scanning-light microscope (12) comprising a laser (13) providing a collimated coherent light beam (2) and a beam stabilator of claim 14 or an apparatus (1) of any of the claims 6 to 13 for the collimated coherent light beam (2).

## Revendications

1. Procédé de mesure de changements de direction d'un faisceau lumineux cohérent collimaté (2),
- dans lequel au moins deux faisceaux partiels (4, 5) sont superposés pour la formation d'un motif d'interférence (6), qui présente, dans au moins une direction transversale s'étend transversalement par rapport à la direction de propagation centrale (9) des au moins deux faisceaux partiels (4, 5), alternativement des minima d'intensité lumineuse et des maxima d'intensité lumineuse successifs,
- dans lequel au moins une partie du motif d'interférence (6), qui comprend une pluralité de maxima d'intensité lumineuse, est enregistrée avec une caméra (8) et
- dans lequel les changements de position des maxima d'intensité lumineuse par rapport à la caméra (8) sont déterminés à partir des images (10) de la caméra (8), **caractérisé en ce que**
- le faisceau lumineux cohérent collimaté (2) avec les changements de direction à mesurer est divisé en au moins deux faisceaux partiels (4, 5),
- le faisceau lumineux cohérent collimaté (2) est focalisé vers au moins un point focal (22) situé devant la caméra (8),
- un décalage central de la pluralité de maxima d'intensité lumineuse par rapport à la caméra (8) dans l'au moins une direction transversale est déterminé et
- à partir du décalage central de la pluralité de maxima d'intensité lumineuse par rapport à la caméra (8) dans l'au moins une direction transversale, un changement de position angulaire du faisceau lumineux cohérent collimaté (2) dans cette direction transversale est déterminé.

2. Procédé selon la revendication 1, **caractérisé en ce que** chacun des au moins deux faisceaux partiels (4, 5) est réfléchi nᵢ fois, dans lequel les nombres nᵢ de réflexions ne sont pas différents ou sont différents d'un chiffre entier pair.

3. Procédé selon l'une des revendications précédentes, **caractérisé en ce que**, en outre, un changement d'une distance moyenne de la pluralité de maxima d'intensité lumineuse dans l'au moins une direction transversale est déterminée à partir des images (10) de la caméra (8).

4. Procédé selon l'une des revendications précédentes, **caractérisé en ce que** les au moins deux faisceaux partiels (4, 5) sont superposés avec un angle aigu entre leurs directions de propagation centrale respectives, dans lequel l'angle aigu est entre 0,3° et 30° et de préférence entre 1° et 10°.

5. Procédé selon l'une des revendications précédentes, **caractérisé en ce que** le faisceau lumineux (2) est divisé en quatre faisceaux partiels qui sont superposés de sorte que le motif d'interférence (6) présente, dans deux directions transversale s'étendant transversalement par rapport à la direction de propagation centrale (9) des quatre faisceaux partiels et s'étendant transversalement entre elles, des minima d'intensité lumineuse et maxima d'intensité lumineuse successifs.

6. Dispositif (1) pour la mesure de changements de direction d'un faisceau lumineux cohérent collimaté (2) avec
- un interféromètre (3) qui est conçu pour la superposition d'au moins deux faisceaux partiels (4, 5) afin de former un motif d'interférence (6) qui présente, dans au moins une direction transversale s'étendant transversalement par rapport à la direction de propagation centrale (9) des au moins deux faisceaux partiels (4, 5), des minima d'intensité lumineuse et maxima d'intensité lumineuse successifs,
- une caméra (8), qui enregistre au moins une partie du motif d'interférence (6), qui comprend une pluralité de maxima d'intensité lumineuse et
- un dispositif d'analyse qui est conçu pour détermine les changements de position des maxima d'intensité lumineuse par rapport à la caméra (8) à partir des images (10) de la caméra (8),
**caractérisé en ce que**
- l'interféromètre (3) est conçu et disposé pour diviser le faisceau lumineux cohérent collimaté (2) avec les changements de direction à mesure, dans les au moins deux faisceaux partiels (4, 5),
- une optique de focalisation (20) du dispositif (1) est conçue et disposée pour focaliser le faisceau lumineux collimaté (2) vers au moins un point focal (22) situé devant la caméra (8),
- le dispositif d'analyse est conçu pour déterminer un décalage central de la pluralité de maxima d'intensité lumineuse par rapport à la caméra (8) dans l'au moins une direction transversale à partir des images (10) de la caméra (8) et
- le dispositif d'analyse est conçu pour déterminer, à partir du décalage central de la pluralité de maxima d'intensité lumineuse par rapport à la caméra (8) dans l'au moins une direction transversale, un changement de position angulaire du faisceau lumineux cohérent collimaté dans cette direction transversale.

7. Dispositif (1) selon la revendication 6, **caractérisé en ce que** l'interféromètre (3) comprend au moins :
- un interféromètre différentiel (18) avec plaque de verre (19) cunéiforme (27) ou parallèle,
- un interféromètre de Sagnac désajusté (29),
- un interféromètre de Michelson désajusté (34),
- un interféromètre de Mach-Zender désajusté (35),
- une plaque de verre en forme de toit (28) ou
- une plaque de verre pyramidale.

8. Dispositif (1) selon l'une des revendications 6 et 7, **caractérisé en ce que** l'interféromètre (3) est conçu pour réfléchir chacun des au moins deux faisceaux partiels (4, 5) nᵢ fois, dans lequel les nombres nᵢ de réflexions ne sont pas différents ou sont différents d'un nombre entier pair.

9. Dispositif (1) selon l'une des revendications 6 à 8, **caractérisé en ce que** l'interféromètre (3) est conçu pour diviser le faisceau lumineux (2) en quatre faisceaux partiels et pour les superposer de sorte que le motif d'interférence (6) présente, dans deux directions transversales s'étendant transversalement par rapport à la direction de propagation centrale (9) des quatre faisceaux partiels et s'étendant transversalement entre elles, des minima d'intensité lumineuse et des maxima d'intensité lumineuse successifs.

10. Dispositif (1) selon l'une des revendications 6 à 9, **caractérisé en ce que** l'interféromètre (3) est conçu pour diviser une partie du faisceau lumineux (2) dans les au moins deux faisceaux partiels (4, 5), qu'il superpose afin d'obtenir le motif d'interférence (6), tandis qu'il divise une autre partie du faisceau lumineux (2) en au moins deux autres faisceaux partiels qu'il superpose afin d'obtenir un autre motif d'interférence qui présente, dans au moins une autre direction transversale s'étendant transversalement par rapport à la direction de propagation centrale (9) des au moins deux autres faisceaux partiels, d'autres minima d'intensité lumineuse et d'autres maxima d'intensité lumineuse successifs, dans lequel la caméra ou une autre caméra (8) enregistre au moins une partie de l'autre motif d'interférence, qui comprend une pluralité d'autres maxima d'intensité lumineuse.

11. Dispositif (1) selon la revendication 10, **caractérisé en ce que** l'interféromètre (3) est conçu pour superposer les au moins deux faisceaux partiels (4, 5) de sorte que, avec un changement de direction du faisceau lumineux (2) dans l'au moins une direction transversale, les maxima d'intensité du motif d'interférence (6) se décalent par rapport à la caméra (8) dans le même sens dans l'au moins une direction transversale, tandis qu'il superpose les au moins deux autres faisceaux partiels de sorte que, avec un changement de direction du faisceau lumineux (2) dans l'autre direction transversale, les autres maxima d'intensité de l'autre motif d'interférence ne se décalent pas par rapport à la caméra ou à l'autre caméra (8) ou bien dans le sens opposé dans l'autre direction transversale.

12. Dispositif (1) selon la revendication 11, **caractérisé en ce que** l'interféromètre (3) est conçu pour diviser l'autre partie du faisceau lumineux (2) en deux autres faisceaux partiels et pour réfléchir les deux autres faisceaux partiels m₁ fois ou m₂ fois, dans lequel les nombres m₁ et m₂ se différencient d'un nombre entier impair.

13. Dispositif (1) selon la revendication 11 ou 12, **caractérisé en ce que** l'interféromètre (3) comprend, pour la division de l'autre partie du faisceau lumineux (2) dans les au moins deux autres faisceaux partiels et pour la superposition des au moins deux autres faisceaux partiels afin d'obtenir l'autre motif d'interférence, au moins :
- un prisme de Dove (37) ou
- un diviseur de faisceau 50/50 (38, 39).

14. Stabilisateur de faisceau pour la stabilisation de la position angulaire d'un faisceau lumineux cohérent collimaté (2) avec un dispositif (1) selon l'une des revendications 6 à 13 pour la mesure de changements de direction du faisceau lumineux cohérent collimaté (2).

15. Microscope à balayage laser (12) avec un laser (13) fournissant un faisceau lumineux cohérent collimaté (2) et avec un stabilisateur de faisceau selon la revendication 14 ou un dispositif (1) selon l'une des revendications 6 à 13 pour le faisceau lumineux cohérent collimaté (2).
